# EUROPEAN PATENT APPLICATION

(11) **EP 4 765 774 A1**
(43) Date of publication of application: **24.06.2026**
(21) Application number: 24221195.1
(22) Date of filing: 18.12.2024
(51) Int. Cl.: H04L 67/12, G06N 20/00, H04L 41/16, H04L 69/08

(54) **SYSTEM AND METHOD OF GENERATING COMMUNICATION DESCRIPTION FILE FOR CONFIGURING DEVICES IN AUTOMATION SYSTEM**

(71) Applicant: Siemens Aktiengesellschaft, 80333 München (DE)
(72) Inventor: E, Navin, 635109 Hosur, Tamil Nadu (IN); HARISPURU, Cedric, 90402 Nürnberg (DE); DUFAURE, Thierry, 12053 Berlin (DE)
(74) Representative: Patentanwaltskanzlei WILHELM & BECK

(57) **Abstract**

A system (304) and method of generating a communication description file for configuring devices in an automation system is disclosed. The method comprises receiving (101) an input comprising a list of signals for communication between a plurality of devices of the automation system. The method comprises determining (302) a first protocol associated with the list of signals, wherein the list of signals is to be converted to a second protocol. Further, the method comprises determining (103) a first model (514) for application of at least one conversion factor associated with the second protocol, using a second model. Furthermore, the method comprises determining (104) a mapping of the list of signals to the second protocol based on an application of at least one conversion factor. Moreover, the method comprises generating (105) the communication description file based on the mapping.

## Description

The present invention relates generally to device configuration in automation systems, and more particularly relates to a system and a method of generating a communication description file for configuring devices in an automation system.

Automation systems refer to substation automation (SA) systems comprising electrical substation devices such as, but not limited to, electrical cables, lines, bus bars, switches, power transformers, and instrument transformers operate in an automated way.

In industrial applications, interoperability between substations from different manufacturers is essential to ensure a cohesive and efficient operation of the automation system. As power systems increasingly adopt advanced technologies and smart grid solutions, substations often incorporate equipment from multiple vendors to leverage specific features, performance criteria, or cost efficiencies. Therefore, achieving seamless interoperability enables the integration of diverse devices and systems without being dependent on a single vendor/manufacturer, thereby promoting competitive pricing and innovation.

Further, interoperability of substation devices enhances reliability and resilience improved monitoring, control, and fault detection, leading to a more secure and efficient power delivery system. Furthermore, in a rapidly evolving energy landscape that demands flexibility and agility, the interoperability of substations ensures adaptation to changing technologies and operational requirements while maintaining service continuity.

To improve the interoperability and flexibility of substation automation systems, an international standard for substation automation and communication has been developed by the International Electrotechnical Commission (IEC), as part of the standard IEC 61850 entitled "Communication networks and systems in substations". Further, an IEC 61850-compliant device in an automation system is called an Intelligent Electronic Device (IED).

The technical specification of the IEC 61850 outlines mapping rules for building and configuring systems that operate with the IEC 61850 and various gateway communication protocols. In the context of the IEC 61850, gateways facilitate communication between lEDs and subsystems that do not support the IEC 61850 protocol. An objective of using gateways in the IEC 61850 is to facilitate seamless communication and data exchange between different devices and subsystems in the substation.

In application, the gateways are used to connect devices that use different communication protocols, such as Modbus, DNP3, or proprietary protocols, to the lEDs. This allows for interoperability between different devices and subsystems, improving the overall reliability and flexibility of the substation.

Further, the technical specification of the IEC 61850 outlines mapping rules for real-time data sharing between lEDs and subsystems that utilize different communication protocols. For example, mapping rules are defined for saving Modbus mapping in a Modbus Configuration Description (MCD) format. The MCD format provides a standardized framework for describing how Modbus registers correspond to IEC 61850 signals, facilitating easier mapping and configuration.

However, one of the challenges in implementing the IEC 61850 is the configuration of gateways between different communication protocols as this requires detailed knowledge of both the IEC 61850 and the specific protocols of the lEDs or subsystems being integrated. For example, the configuration of Modbus in MCD format requires expertise and knowledge of register reference documents for both Modbus and IEC 61850. Each register reference document includes a device-specific signal list. For example, a Modbus register reference document for a specific device includes a specific Modbus signal list, as different manufacturers may define their registers differently. Device-specific register reference documents are essential for correctly configuring and interacting with the other devices, as they outline the structure, organization, addresses, sizes, and data types of the Modbus registers. Therefore, a configuration engineer must have access to, and a detailed understanding of Modbus register reference documents associated with devices from different manufacturers.

Consequently, substantial engineering efforts are required in mapping signals between different protocols. Such requirements of substantial engineering efforts may involve time-consuming tasks, such as, but not limited to, analyzing documentation, configuring parameters, and testing the communication links to ensure correct functioning. This complexity exists not only between IEC 61850 and Modbus but across all communication mapping protocols.

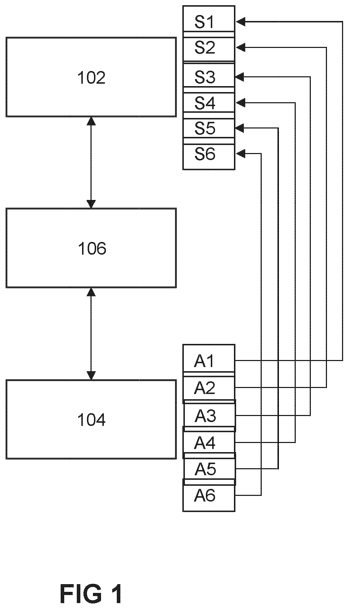

In an example, FIG 1 illustrates an exemplary representation of the manual steps followed by a configuration engineer to configure a gateway 106for communication flow between a Modbus device 102 and an IEC 61850 subsystem 104, in accordance with related art. Said manual steps for configuration of the gateway device are described below in conjunction with FIG 1.

In the first step, the configuration engineer is required to obtain the Modbus signal list from the Modbus register reference document of the Modbus device 102. For example, the Modbus signal list may include signals A1-A6. In an example, the Modbus register reference document may be obtained as a non-editable version of the document. In another example, the Modbus register reference document may be obtained in an editable spreadsheet format.

In the second step, the configuration engineer is required to identify the corresponding IEC data model of signals to be mapped from the Modbus signal list. For example, the IEC data model of signals may include signals S1-S6. In an example, the configuration engineer is required to identify the corresponding signals S1-S6 to be mapped from A1-A6. This step requires the configuration engineer to possess knowledge of the IEC 61850.

In the third step, the configuration engineer is required to create the IEC 61850 data model using manufacturer-specific tools. Depending on the manufacturer, the appropriate engineering tool or software for creating and configuring the IEC 61850 data model may be identified and selected. One example of such tools includes Intelligent Control Device (ICD) files which are often provided by manufacturers to define the device's capabilities and how it fits into the IEC 61850 framework. Another example includes Substation Configuration Language (SCL) Tools which enable defining and configuring communication and data modeling architecture of a substation.

In the fourth step, the configuration engineer is required to manually map the created IEC data model to the register address from the Modbus signal list. The Modbus signal list is mapped in an MCD file.

In the final step, the configuration engineer exports the mapped configuration, i.e., the MCD file, and loads the configuration file to the gateway device.

Further, the technical specification of the IEC 61850 outlines mapping rules for establishing communication flow between field devices through a structured approach that includes defining standardized communication protocols, data modeling, and implementing an interoperable naming convention for unique identification. The field devices such as, but not limited to, sensors and actuators refer to one or more equipment located in the field to collect data and perform specific functions within a Supervisory Control and Data Acquisition (SCADA) system. The SCADA systems are used in the industrial automation and process control to monitor and manage various processes in real time. The SCADA system collects data from field devices, processes such collected data, and allows operators to control the system through a centralized interface.

Additionally, the IEC 61850 enabled configuration of the field devices support automated discovery of the field devices in a network for configuration management, and testing procedures. The automated discovery enables validation of communication links, thereby ensuring seamless integration and interoperability of field devices from different manufacturers within the system.

However, a configuration engineer is required to follow manual steps to configure the SCADA system for communication with field devices. Said manual configuration present several challenges, such as, but not limited to, complexity and potential for human error. Further, the configuration engineers must ensure that each field device is accurately configured with the correct communication parameters, such as IP addresses and port settings, which can be labor intensive and error-prone, especially in large scale settings with numerous field devices.

Additionally, the need to create and map profiles of field devices into the SCADA system can lead to inconsistencies, if not performed efficiently, as any misconfiguration may interrupt data transmission or result in incorrect data representation. Further, the lack of standardized practices across different manufacturers can complicate interoperability, making integration more time-consuming and challenging. Moreover, manually set up communication links can be labor-intensive in testing and troubleshooting, requiring extensive validation to ensure reliable operation. This further adds to the complexity and the time required for system commissioning.

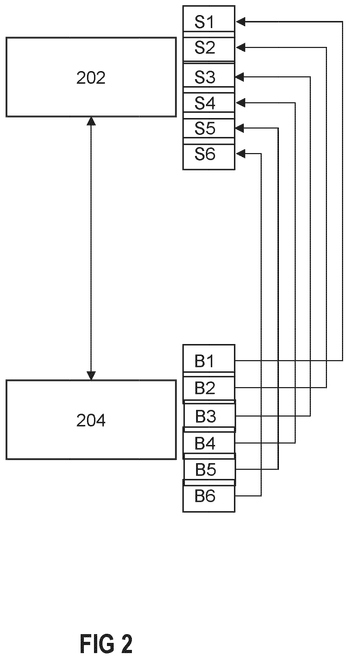

In another example, FIG 2 illustrates an exemplary representation of the manual steps followed by a configuration engineer to configure devices in an automation system, in accordance with existing art. FIG 2 illustrates an exemplary representation of by The configuration engineer may follow the manual steps to configure a SCADA system 202 for communication with a field device 204 in the automation system, in accordance with a related art. Said manual steps for configuration of the SCADA system are described below in conjunction with FIG 2.

In the first step of the configuration of the SCADA system, the configuration engineer obtains a signal list from the register reference document of the field device. In an example, the signal list may include signals B1-B6. In an example, the register reference document may be obtained as a non-editable version of the document. In another example, the register reference document may be obtained in an editable spreadsheet format.

In the second step, the configuration engineer creates a communication description file (CDF). The CDF defines data points for each signal to be communicated between the field device and the SCADA system. This step requires the protocol expertise of the configuration engineer as each data point represents a specific signal that the SCADA system will read from or send to the field device. In an example, the specific signal associated with the SCADA system may be S1-S6. In an example, the configuration engineer creates the CDF for communication between the field device and the SCADA system defining mapping of signals B1-B6 to signals S1-S6.

In the final step of the configuration, the configuration engineer exports and loads the CDF to update the SCADA system.

In each of the above-mentioned configuration examples, the configuration engineer may take many hours to days to complete the setup, depending on the complexity of the substation system and the specific protocol expertise of the engineer.

In light of the above, there remains a need for an improved method of generating a communication description file. When a device in an automation system is to be configured, the engineering efforts must be reduced.

The present invention seeks to overcome these challenges by enabling the creation of a communication description file with a single click using a Machine Learning (ML) model. This reduces the engineering efforts from days to minutes and a user with minimal knowledge and/or expertise can adopt this solution to engineer effortlessly. The present invention is applicable to create for example, but not limited to, flexible IEC 61850 data models and is not restricted only to gateways.

The object of the present invention is achieved by a computer-implemented method of generating a communication description file for configuring devices in an automation system. Advantageously, generating the communication description file standardizes the configuration process by streamlining integration and reducing the risk of human error. Furthermore, the CDF facilitates convenience in updates and modifications, enhancing maintainability and ensuring consistent communication across the automation system.

The method includes receiving, by a processor, an input comprising a list of signals for communication between a plurality of devices of the automation system. The method also includes determining, by the processor, a first protocol associated with the list of signals, such that the list of signals is to be converted to a second protocol. Advantageously, determining the first protocol to be converted to the second protocol simplifies communication among the plurality of devices reducing the risk of errors and enhancing overall system efficiency.

Further, the method includes determining, by the processor, a first model for application of at least one conversion factor associated with the second protocol, using a second model. The at least one conversion factor refers to mathematical relationships used to transform or translate data between different formats, units, or scales during the process of automatic protocol identification and configuration in the automation system. In an example, the at least one conversion factor may be applied when mapping signals identified from a field device to the IEC data model. Therefore, the at least one conversion factor enables determining any necessary adjustments to ensure that the values from the field devices are accurately represented in the IEC data model. For example, if a field device sends a measurement in one unit, such as degrees Celsius, but the IEC data model expects it in another unit, such as degrees Fahrenheit, a conversion factor would be needed to convert the readings accordingly. The application of conversion factor ensures that the data integrity is maintained, and the SCADA system can accurately interpret and utilize the information from the field devices for monitoring and control purposes.

Furthermore, the method includes determining, by the processor, a mapping of the list of signals to the second protocol based on an application of at least one conversion factor. Moreover, the method includes generating, by the processor, the communication description file based on the mapping. Advantageously, the communication description file enables automatic conversion of data from one protocol to another based on the mapping. For example, if a device within the automation system sends data in a proprietary format, the system is enabled to map the sent data to a standardized format such as, but not limited to, IEC 61850 using appropriate conversion factors.

In one or more embodiments, the first model determines the at least one conversion factor associated with the second protocol based on at least one of the first protocol associated with the list of signals, the second protocol corresponding to the communication between the plurality of devices, and a file type of the communication description file. The determination of the at least one conversion factor based on the above-described features enhances the compatibility, accuracy, and efficiency of communication between diverse devices, such as a first device and a second device, using different protocols. Further, the first model, by automatically recommending and configuring the at least one conversion factor, enhances the integration of different devices in the automation system, reducing the manual effort required for configuration.

In one or more embodiments, the computer-implemented method further comprises enabling, by the processor, configuration of a gateway between a first device from the plurality of devices and a second device from the plurality of devices, such that the first device supports the first protocol, and the second device supports the second protocol. Said configuration of the gateway between enhances interoperability, flexibility, and scalability within the automation system. This further allows for seamless data translation, efficient data management, and resource optimization, while simplifying integration and monitoring tasks. This feature offers essential capabilities for modern automation systems that include devices and substations with diverse communication standards.

In one or more embodiments, the first protocol associated with the list of signals is determined by extracting, by the processor, data associated with the list of signals. The extracted data comprises address information of the list of signals corresponding to the first protocol. Upon extraction, a language of the list of signals is detected, by the processor, from the extracted data. Further, the language of the extracted data in the list of signals is converted, by the processor, into a preferred language for analysis. Furthermore, and the first protocol associated with the list of signals is determined, by the processor, by analyzing the data of the list of signals in the preferred language. Advantageously, analyzing the list of signals in the preferred language enhances the accuracy and efficiency of protocol identification, leading to improved understanding and interpretation of the list of signals without the risk of miscommunication due to language barriers or discrepancies in data representation.

In one or more embodiments, the mapping of the list of signals to the second protocol comprises the plurality of signals and corresponding address information associated with the first protocol and corresponding mapped plurality of signals and corresponding address information associated with the second protocol. Advantageously, the mapping of the list of signals ensures that each signal in the first protocol is accurately identified and directed to its appropriate counterpart in the second protocol.

In one or more embodiments, the second model is trained using a predefined training dataset and the predefined training dataset comprises historically generated communication description files, communication mapping configuration, historic configuration data, the plurality of signal lists, and a plurality of mappings of the plurality of signals. This enhances the ability of the second model to accurately interpret and predict communication between devices in diverse systems.

In one or more embodiments, the computer-implemented method further comprises displaying, by the processor, a recommendation of the mapping of the list of signals to the second protocol on a screen of the automation system. Advantageously, displaying the recommendation enables users to review and modify the system-generated mapping of the list of signals. This enhances the accuracy of the system by enabling real-time adjustments that may account for specific discrepancies, when used without adjustments.

Further, the computer-implemented method comprises receiving, by the processor, a modification input from the user for modifying the mapping of the list of signals. Furthermore, the computer-implemented method comprises modifying, by the processor, the mapping of the list of signals based on the modification input, and generating the communication description file based on the modified mapping. This iterative feedback loop enables continuous improvement of the mapping process, ensuring that the automation system remains aligned with actual data flows and functional requirements. This results in reliable communication and data integrity across protocols.

In one or more embodiments, the computer-implemented method includes generating, by the processor, a feedback signal based on the modification input. Advantageously, the modification input enabled updation of the second model based on the feedback signal. Further, the computer-implemented method includes updating, by the processor, the second model based on the feedback signal. Advantageously, updating the second model based on feedback signals enhances overall model performance and robustness by improving decision-making capabilities of the model. Further, implementation of such model in the automation system.

In one or more embodiments, the first model is a classification machine learning (ML) model. Advantageously, the classification ML model can accurately predict the appropriate conversion factor for signals in second protocol. Therefore, using the classification ML model as the first model for determining conversion factor associated with the second protocol can significantly improve the accuracy and efficiency of the mapping process, especially for complex scenarios with numerous signal types.

In one or more embodiments, the second model is a generative artificial intelligence model.

The object of the present invention is also achieved by a system for generating a communication description file for configuring devices in an automation system. The system comprises a processor and a memory coupled to the processor, wherein the memory comprises instructions which, when executed by the processor, configures the processor to receive an input comprising a list of signals for communication between a plurality of devices of the automation system, determine a first protocol associated with the list of signals, wherein the list of signals is to be converted to a second protocol, determine a first model for application of at least one conversion factor associated with the second protocol, using a second model, determine a mapping of the list of signals to the second protocol based on an application of at least one conversion factor, and generate the communication description file based on the mapping.

The object of the present invention is also achieved by a computer program product, comprising computer program code which, when executed by a processor, cause the processor to conduct steps of the aforementioned method.

The object of the present invention is also achieved by a computer-readable medium comprising a computer program product comprising computer program code which, when executed by a processor, cause the processor to conduct steps of the aforementioned method.

Still other aspects, features, and advantages of the invention are readily apparent from the following detailed description, simply by illustrating a number of particular embodiments and implementations, including the best mode contemplated for conducting the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings.
FIG 1 illustrates an exemplary representation of the manual steps followed by a configuration engineer to configure a gateway, in accordance with existing art;
FIG 2 illustrates an exemplary representation of the manual steps followed by a configuration engineer to configure devices in an automation system, in accordance with existing art;
FIG 3 is a block diagram representation of an environment comprising a system of generating a communication description file for configuring devices in an automation system, in accordance with one or more embodiments of the present invention;
FIG 4 is a flowchart representation of a computer-implemented method of generating the communication description file for configuring devices in the automation system, in accordance with one or more embodiments of the present invention;
FIG 5 is a block diagram representation of a system of generating the communication description file for configuring devices in the automation system, in accordance with one or more embodiments of the present invention;
FIG 6 illustrates a workflow for generation of the communication description file from the list of signals to the second protocol, in accordance with an embodiment of the present invention; and
FIG 7 illustrates an exemplary implementation of the system in an existing framework for generation of the communication description file from the list of signals to the second protocol, in accordance with an embodiment of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product of generating a communication description file for configuring devices in an automation system are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Conventional methods and systems involve substantial manual intervention for generating CDFs for configuring devices in automation system leading to an increased configuration workload. This further impacts the deployment timeline of substation automation projects.

Unlike the conventional methods and the systems, the proposed solution reduces the substantial manual intervention in generating the CDFs. In the proposed solution, the CDFs are generated with a single click using an artificial intelligence (Al) model and/or machine learning (ML) model with minimal manual intervention. Therefore, the proposed solution reduces the time, effort and resources required in the process of generation of the communication description files. As a result, the proposed method enhances the ease of generation of the communication description file, which was otherwise a cumbersome process. Further, the use of various models does not require an expert in the domain to generate the communication description file.

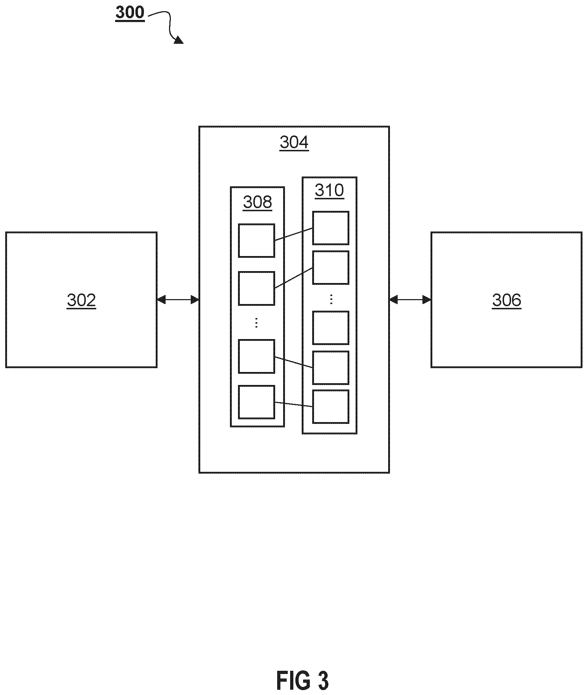

Referring now to FIG 3, illustrated is an automation system environment (as represented by reference numeral 300) includes a system 304 for generating the communication description file for configuring devices in an automation system. In an embodiment, the automation system may include a plurality of devices such a first device 302 and a second device 306. In an additional embodiment, the automation system may include a gateway between the first device 302 and the second device 306.

In an example, the first device 302 may be a SCADA system and the second device 306 may be a field device. In another example, the first device 302 and a second device 306 may include, for example, sensors, actuators, Modbus device, DNP3 device, IED, or other equipment installed in the automation system.

In an example, the first device 302 and the second device 306 may be manufactured by different manufacturers and support different protocols defined by different list of signals.

In an example, the system 304 may be implemented for configuring the SCADA system for seamless communication between the SCADA system and the field devices of the automation system. In another example, the system 304 may be implemented at the gateway for configuring the gateway in accordance with one or more embodiments of the present invention.

The system 304 may be configured to define mapping of a list of signals 308 associated with the first device 302 to a second protocol 310associated with the second device 306. This ensures interoperability and seamless communication between the first device 302 and the second device 306.

In one or more embodiments, the system 304 may be implemented at the first device 302 for configuring the first device 302 by generating a communication description file (CDF) defining a mapping between the list signals 308 associated with the first device 302 and a second protocol 310associated with the second device 306. As used herein, CDF is interchangeably referred to herein as a communication interface file or a communication protocol file, is a file that describes the communication interface between different components or systems. It defines the rules and specifications for the components or systems to exchange data and information with each other. CDFs are essential for ensuring interoperability and proper configuration of all connected components of the automation system. The communication description file includes information such as, for example, but not limited to, data formats that can be exchanged between the communicating components or systems; message structures and format of the messages or data packets that are exchanged, including the headers, payloads, and any necessary metadata; communication protocols, handshaking procedures, and sequence of actions required for successful data exchange between the components or systems; timing requirements such as timeouts, delays, and synchronization mechanisms to ensure reliable and coordinated communication; and error detection, error reporting, and error recovery mechanisms used in the communication process. The plurality of devices may refer to different devices supporting different communication protocols. The different devices may be manufactured by different manufacturers and different manufacturers define their devices in different manners. As discussed herein, the CDF may include both proprietary and standard formats. For example, the CDF in proprietary format may be a manufacturer-specific format. For example, the CDF in standard format may be an internationally accepted standard format such as a CDF format defined in the IEC 61850 standard. The communication description file can be written in various formats, for example, but not limited to, XML, JSON, or proprietary formats, depending on the specific communication protocols and standards used in the system or application.

In an example, the system 304 is a SCADA system which directly communicates with the field devices without the gateway. In such a case, the SCADA system may be configured by defining a mapping of a list of signals 308 associated with the SCADA system to a second protocol associated with a field device. This ensures interoperability and seamless communication between the SCADA system and the field device. Therefore, the present solution is not only applicable for configuring gateways but is also applicable for creating a flexible data model. This enables seamless migration of consumers using different protocols to standard protocols such as, for example, but not limited to, the IEC 61850.

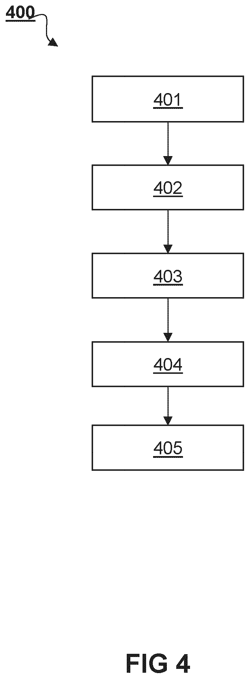

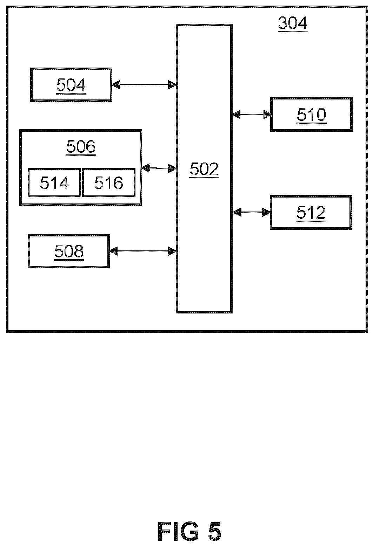

FIG. 4 illustrates a flowchart of a method (as represented by reference numeral 400) for generating the communication description file for configuring devices in the automation system. FIG. 5 illustrates a block diagram representation of a system 304 for generating the communication description file for configuring the devices in the automation system, in accordance with one or more embodiments of the present invention. As illustrated in FIG. 5, the system 304 includes a communication mechanism such as a bus 502 for passing information among the components of the system 304. The system 304 includes a processor 504 and a memory 506. Herein, the memory 506 is communicatively coupled to the processor 504. In an example, the memory 506 may be embodied as a computer readable medium on which program code sections of a computer program are saved, the program code sections being loadable into and/or executable in a system to make the system 304 execute the steps, as discussed herein, for performing the said purpose.

Referring to FIGS 4 and 5 in combination, the various steps of the method 400 as described hereinafter may be executed in the system 304, or specifically in the processor 504 of the system 304, for generating a communication description file for configuring devices in the automation system. It may be appreciated that although the method 400 is illustrated and described as a sequence of steps, it may be contemplated that various embodiments of the method 400 may be performed in any order or a combination and need not include all of the illustrated steps.

In embodiments of the present invention, at step 401, the method 400 includes receiving an input which includes a list of signals for communication between a plurality of devices of the automation system. The list of signals may be associated with a protocol for communication between the plurality of devices. A protocol for communication for a device in the automation system refers to a set of mapping rules and standards that govern how the device manufactured by a specific manufacturer communicates with other devices or systems. This ensures interoperability and seamless communication between devices from different manufacturers. For example, the protocol is the IEC 61850.

Herein, the input may be received by the system 304 automatically. In another example the input may be provided by a configuration engineer. The input may include the list of signals for communication between the plurality of devices of the automation system. The list of signals may be received as a non-editable document or an editable spreadsheet document. The input may include information associated with the device type of a first device and corresponding manufacturer of the first device. The present invention enables retrieval of the relevant list of signals based on the received information associated with the device type and corresponding manufacturer of the first device. In one or more embodiments, the first device supports the first protocol.

At step 402, the method 400 includes determining the first protocol associated with the list of signals. The list of signals is to be converted to a second protocol. The second protocol may be supported by a second device in the automation system. The first device and the second device may be manufactured by different manufacturers and thereby support different protocols, i.e., the first protocol and the second protocol, respectively. In an example, the first device may be a programmable logic controller (PLC) using Modbus (i.e., a first protocol) while the second device may be an lED using IEC 61850 (i.e., a second protocol). In another example, the first device may be a terminal device using DNP3 (i.e., a first protocol) while the second device may be a building management system using a building automation and control network (BACnet) protocol (i.e., a second protocol).

Initially to determine the first protocol associated with the list of signals, data associated with the list of signals is extracted from the input. The extracted data includes address information of the list of signals corresponding to the first protocol. For example, when the first protocol is Modbus, the address information of the list of signals may include coil addresses, input register addresses, and holding addresses. Further, a language of the list of signals is detected from the extracted data. For example, the list of signals may be in German. Thereafter, the language of the extracted data in the list of signals is converted into a preferred language for analysis. The preferred language for analysis may be provided as another input by the configuration engineer. For example, the preferred language may be English which may be provided as another input by the configuration engineer. In the above example, the list of signals in German may be converted into English.

Furthermore, the first protocol associated with the list of signals is determined by analyzing the data of the list of signals in the preferred language. The list of signals translated into the preferred language is analyzed and corresponding signal are identified to standard signal names. For example, in the context of Modbus protocol, signal name 'Relä' in German translated to 'Coil' in English. Thereafter, the translated signal name 'Coil' in English may be analyzed and corresponding signal 'Relay' may be identified as the standard signal names.

At step 403, the method 400 includes determining a first model for application of at least one conversion factor associated with the second protocol, using a second model. In one or more embodiments, the first model is a classification machine learning (ML) model. The first model is configured to determine at least one conversion factor associated with the second protocol based on at least one of the first protocol associated with the list of signals, the second protocol corresponding to the communication between the plurality of devices, and a file type of the communication description file.

The classification ML model obtains input that describes the signals from one protocol (for example, the first protocol). In an example, the input to the classification ML model may include textual signal descriptions such a "Relä" for Coil or "Schalterstellung" for Breaker position, etc. The input may further include numerical data about the signals, such as, but not limited to, types of readings (example, integer, float) and range of values. The input may also include information about the protocol involved, such as corresponding specification and application of the first protocol.

Further, the classification ML model may be trained to determine at least one conversion factor associated with the second protocol. Said determination involves understanding the relationships between the signals in different protocols, i.e., the first protocol and the second protocol, by categorizing input into predefined classes. The at least one conversion factor may correspond to a criteria for mapping the list of signals in the first protocol to the list of signals in the second protocol. For example, the classification ML model might determine that a value in Modbus (i.e., first protocol) requires scaling by a factor of 1.5 when converted into a second protocol. In one or more embodiments, the second model is a generative artificial intelligence (Al) model. The generative AI model is a type of machine learning model that is trained to generate new instances of data. The generative AI model could be trained on a training dataset. During training, the generative AI model learns various attributes of the training dataset. The learned attributes are then be used by the generative AI model to produce a new dataset which was not part of the original training dataset. In a non-limiting example, the generative AI model may be a generative adversarial network (GAN) model, variational autoencoder (VAE) model, and a transformer-based model.

In one or more embodiments, the second model is trained using a predefined training dataset. The predefined training dataset includes historically generated communication description files, communication mapping configuration, historic configuration data, the plurality of signal lists, and a plurality of mappings of the plurality of signals.

The historically generated communication description files may contain detailed information about the communication protocols, signals, and any other relevant data that is used for communication, for example, between the SCADA system and the field devices, or between the first device and the second device via the gateway. These files provide a historical record of how different protocols were mapped and converted in the past. The communication mapping configuration includes the configuration settings and mappings that were previously used to convert signals from one protocol to another. This helps the model to understand how signals were mapped in the past and learn from these mappings. The historic configuration data refers to the historical configuration data related to protocols, signals, and mappings. Said data provides context and historical patterns that the model can learn from to improve the conversion process. The plurality of signal lists comprises lists of signals used in different communication protocols, for example, but not limited to, a list of signals used in Modbus protocol, and another list of signals used in IEC 61850 protocol. The plurality of mappings of signals may include examples of how signals from one protocol were mapped to signals in another protocol. By analyzing these mappings, the model can learn the relationships between different signals and protocols.

According to one or more embodiments, the generative AI model may be trained using the predefined training dataset to generate the classification ML model. For example, the generative AI model could be trained on the predefined training dataset which comprises historically generated communication description files, communication mapping configuration, historic configuration data, the plurality of signal lists, and a plurality of mappings of the plurality of signals. During the training, the generative AI model learns patterns and relationships between the different elements of the predefined training dataset, such as the characteristics of different protocols, the mapping rules, and the factors that influence conversion factor determination. These learned patterns and relationships could be used by the generative AI model to create a classification ML model that is configured to determine the conversion factors associated with a new input protocol for mapping to another protocol. The generation of the classification ML model is very dynamic and highly adaptive. The generative AI model can be for example Generative Adversarial Networks (GANs).

At step 404, the method 400 includes determining a mapping of the list of signals to the second protocol based on an application of at least one conversion factor for generating the communication description file. In one or more embodiments, the mapping of the list of signals to the second protocol comprises a plurality of signals and corresponding address information associated with the first protocol and corresponding mapped plurality of signals and corresponding address information associated with the second protocol.

Further, in one or more other embodiments, a recommendation of the mapping of the list of signals to the second protocol is displayed on a screen or a user interface of the automation system for receiving a modification input from the user for modifying the mapping of the list of signals. For example, a user interface may include a graphical user interface (GUI), a command line interface, a touch user interface, a voice user interface, or a virtual reality user interface. Accordingly, the mapping of the list of signals is modified based on the received modification input, and generating the communication description file based on the modified mapping. In yet another embodiment, the system 304 can also automatically modify the mappings based on user's historic preferences or a preset instruction by the user.

In one or more embodiments, a feedback signal is generated based on the modification input. As a result, the second model is updated based on the generated feedback signal. The feedback signal is used to help the second model to record and learn the user preferences. This helps the second model to accurately provide user preferred mappings over a period of time. The feedback signal enables error reduction by comparing the feedback with a set reference value, discrepancies (errors) can be adjusted accordingly, it can provide system stability as it aids in making the system 304 more stable against internal and external disturbances, the feedback signal also helps in performance improvement by enhancing the performance criteria of the system such as accuracy, sensitivity, etc.

At step 405, the method 400 includes generating, by the processor, the communication description file based on the mapping. Further, the present invention involves enabling configuration of the SCADA system with minimal manual intervention for seamless communication between the SCADA system and the field devices based on the generated communication description file.

Further, the present invention involves enabling configuration of a gateway between the first device and the second device by the system 304. The first device supports the first protocol, and the second device supports the second protocol. As a result, the gateway is configured with minimal manual intervention. Referring to FIG 5, it may be appreciated that the system 304 described herein may be implemented in various forms of hardware, software, firmware, special purpose processors, or a combination thereof. In an example, the system 304 may be for example an automation system itself. One or more of the present embodiments may take the form of a computer program product comprising program modules accessible from computer-usable or computer-readable medium storing program code for use by or in connection with one or more computers, processors, or instruction execution system. For the purpose of this description, a computer usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 304 may be embodied as a computer-program product 304 programmed for performing the said purpose. The system 304 may be incorporated in one or more physical packages (e.g., chips of the AGV). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that, in certain embodiments, the computing device may be implemented in a single chip.

Generally, as used herein, the term "processor" refers to a computational element that is operable to respond to and processes instructions that drive the system 304. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 304.

Herein, the memory 506 may be volatile memory and/or non-volatile memory. The memory 506 may be coupled for communication with the processor 504. The processor 504 may execute instructions and/or code stored in the memory 506. A variety of computer-readable storage media may be stored in and accessed from the memory 506. The memory 506 may include any suitable elements for storing data and machine-readable instructions, such as read-only memory, random access memory, erasable programmable read-only memory, electrically erasable programmable read-only memory, a hard drive, a removable media drive for handling compact disks, digital video disks, diskettes, magnetic tape cartridges, memory cards, and the like. In the present system, the first model 514 and the second model 516 are stored in the memory 506.

In particular, the processor 504 has connectivity to the bus 502 to execute instructions and process information stored in the memory 506. The processor 504 may include one or more processing cores with each core configured to perform independently. A multi-core processor enables multiprocessing within a single physical package. Examples of a multi-core processor include two, four, eight, or greater numbers of processing cores. Alternatively, or in addition, the processor 504 may include one or more microprocessors configured in tandem via the bus 502 to enable independent execution of instructions, pipelining, and multithreading. The processor 504 may also be accompanied by one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 304 may further include an interface 508, such as a communication interface (with the said terms being interchangeably used) which may enable the system 304 to communicate with other systems for receiving and transmitting information. The communication interface 508 may include a medium (e.g., a communication channel) through which the system 304 communicates with other system. Examples of the communication interface 508 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 508 may include one or more of a wired connection, a wireless network, cellular networks such as 2G, 3G, 4G, 5G mobile networks, and a Zigbee connection.

The system 304 also includes a database 510. As used herein, the database 510 is an organized collection of structured data, typically stored in a computer system and designed to be easily accessed, managed, and updated. The database 510 may be in form of a central repository of information that can be queried, analyzed, and processed to support various applications and business processes. In the system 304, the database 510 provides mechanisms for storing, retrieving, updating, and deleting data, and typically includes features such as data validation, security, backup and recovery, and data modelling. The database 510 includes received list of signals, historically generated communication description files, communication mapping configuration, historic configuration data, the plurality of signal lists, and a plurality of mappings of the plurality of signals.

The system 304 further includes a user interface 512. The user interface 512 may take various forms depending on the specific application of the system 304. In an example, the user interface 512 may include one or more of a keyboard, a mouse, a touchscreen display, a microphone, or any other hardware component that enables the user to interact with the system 304. Further, the user interface 512 may also be in the form of a display to receive inputs and also display an output response. It is to be understood that, when reference is made in the present invention to the term "display" this refers generically either to a display screen on its own or to the screen and an associated housing, drive circuitry and possibly a physical supporting structure, of which all, or part of is provided for displaying information as part of the automation systems.

In the present system 304, the processor 504 and accompanying components have connectivity to the memory 506 via the bus 502. The memory 506 includes both dynamic memory (e.g., RAM, magnetic disk, writable optical disk, etc.) and static memory (e.g., ROM, CD-ROM, etc.) for storing executable instructions that when executed perform the method steps described herein for generating communication description file for configuring devices in the automation system. Also, in the system 304, the memory 506 may be configured to store the data associated with or generated by the execution of the inventive steps.

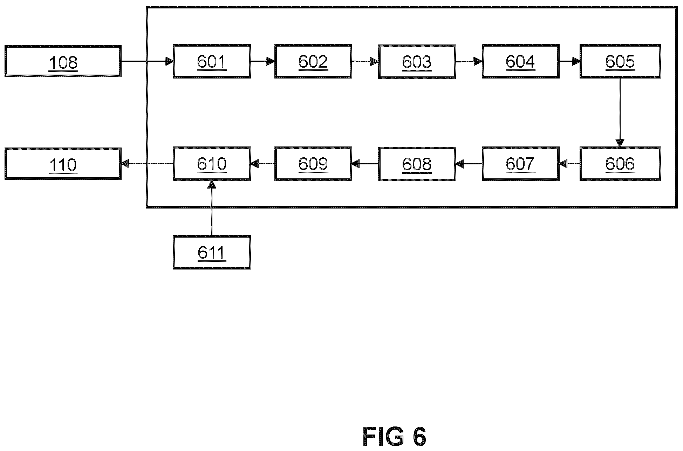

FIG 6 illustrates a workflow for CDF generation from the list of signals to the second protocol, in accordance with an embodiment of the present invention. According to one or more embodiments, the workflow is implemented by the system 304, via the processor 504, for generating the CDF for configuring devices in the automation system.

At step 601, the system 304 obtains the list of signals 308 as input. In an example, the input may be a non-editable version of the list of signals 308, for example, the list of signals 308 may be in PDF format. In another example, the input may be in an editable spreadsheet format, for example, CSV format.

At step 602, the system 304, via the processor 504, extracts data associated with the list of signals. The extracted data includes address information of the list of signals corresponding to the first protocol. In an example, the processor 504 extracted data may be a table of address information of the list of signals to the first protocol.

At step 603, the system 304, via the processor 504, detects the language of the list of signals. For example, the language of the signals may be determined as German.

At step 604, the system 304, via the processor 504, converts the language of the extracted data in the list of signals into a preferred language for analysis. For example, the preferred language for analysis may be English. Therefore, the list of signals in German is translated into English.

At step 605, the system 304, via the processor 504, determines the first protocol associated with the list of signals by analyzing the data of the list of signals in the preferred language. For example, the translated list of signals in English is analysed and corresponding standard signal names are identified. In a non-limiting example, the first protocol may be Modbus protocol. In the example, the standard signal name 'Relay' may be identified from the translated signal name 'Coil' in English.

At step 606, the system 304, via the processor 504, determines, using the second model, the first model for application of at least one conversion factor associated with the second protocol. The second model may be the generative AI model. According to one or more embodiments, the generative AI model may determine the first model for determining the at least one conversion factor associated with the second protocol. The first model may be classification ML model. According to one or more embodiments, the generative AI model may determine the at least one conversion factor associated with the second protocol. In an example, the second protocol may be IEC 61850. In the example, the generative AI model may determine the classification ML model to determine the at least one conversion factor for mapping the list of signals associated with Modbus protocol to the IEC 61850 protocol.

At step 607, the system 304, via the processor 504, determines, using the first model, the at least one conversion factor to map the list of signals to the second protocol. In an example, the second protocol may be IEC 61850 protocol and may include the signal addresses of data object (DO) or data attribute (DA). In IEC 61850 protocol, a DO represents a specific data element or variable within a logical node. The DO may be used to define the data that can be read or written to a device, for example, the SCADA system. Further, the DA represents a specific data element or variable. The DOs are used to define the data that can be read or written to the device, for example, the SCADA system. For example, a DO may represent a status of circuit breaker while DA associated with the status of circuit breaker may include information such as, but not limited to, the current state (i.e., open or closed), the trip class, and the reason for tripping. For example, for mapping the list of signals in Modbus to IEC 61850, the first model may determine scaling factors, with 1.5 as at least one conversion factor.

At step 608, the system 304, via the processor 504, applies, using the first model, the at least one conversion factor to map the list of signals to the second protocol and generate a recommendation of the mapping. For example, the scaling factor, 1.5 is applied to the list of signals in Modbus to generate corresponding list of signals in IEC 61850.

At step 609, the system 304, via the processor 504, displays the recommendation of the mapping of the list of signals to the second protocol on a screen of the automation system. For example, the recommendation of the mapping of the list of signals in Modbus to IEC 61850, generated using the first model, is displayed on the screen of the automation system.

At step 610, the system 304, via the processor 504, modifies the mapping of the list of signals based on a modification input 611. The modification input 611 is received from the user for modifying the mapping of the list of signals. Finally, the CDF 310 is generated based on the modified mapping. For example, the CDF 310 may define the mapping of the list of signals 308 in the first protocol used by the first device, such as the SCADA system, to the second protocol used by the second device, such as a field device. This enables seamless communication between the SCADA system and the field devices. In an example, a signal generated from the SCADA system using first protocol is mapped to the corresponding signal in second protocol used by a field device. In another example, when the SCADA system using Modbus generates a signal to the field device using the IEC 61850, then the seamless communication between the SCADA system and the field device is enabled using the CDF 310. For example, the 'relay' signal in Modbus is mapped to the 'Control' data object in IEC 61850 using the CDF 310 enabling the seamless communication between the SCADA system and the field device.

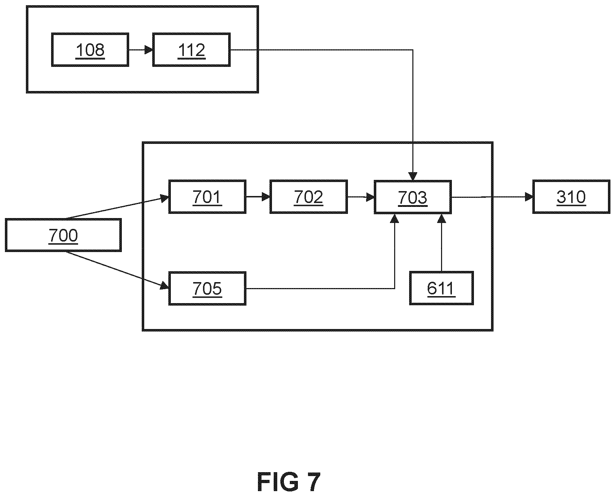

FIG. 7 illustrates an exemplary implementation of the system 304 in an existing framework for CDF generation from the list of signals to the second protocol, in accordance with an embodiment of the present invention. The existing framework involves using a configurator tool 700 for generating CDFs by the configuration engineers. The configurator tool is a software application designed to facilitate the creation and management of CDFs for substation automation systems. It provides a user-friendly interface that allows configuration engineers to input, modify, and validate the configuration parameters necessary for effective communication and interoperability among devices such as the SCADA system and the field devices. In an example, the configurator tool may be vendor-specific tool, third-part tool, or an open-source tool.

As shown in the figure, at step 701, the configurator tool 700 may be used to create the CDF. In an example, the configuration engineer may use the configurator tool 700 to generate Modbus Configuration Description (MCD).

Thereafter, at step 702, the configuration engineer may create a data model for mapping the input list of signals in first protocol to the second protocol.

In an embodiment, the system 304 may be implemented within the existing framework. In such scenario, a mapping recommendation is generated without manual intervention to map the input list of signals 308 to the second protocol.

At step 703, when the system 304 is implemented, the generated mapping recommendation is displayed on the screen of the automation system to receive modification input from user (i.e., configuration engineer). In the existing framework, the configuration engineer is required to manually access the generated mapping recommendation using the configurator tool 700. In an example, the modification input may be user configurable mapping settings. Finally, the CDF 310 is generated by modifying the recommended mapping based on the modification input.

As discussed herein, the present invention enables configuration of the devices in the automation system by generating CDFs with minimal manual intervention. Further, the CDFs are generated in less time as compared to the conventional time-consuming methods which involved substantial manual intervention. As a result, the present invention provides a cost-effective solution in contrast to the convention cost inefficient methods which involved higher costs due to extensive labor and person-hours involved therein. Moreover, the present invention results in improved the deployment timelines of an automation system by mitigating the challenges associated with the requirement of extensive experience and knowledge of the different protocols by the configuration engineer. Furthermore, the present invention can be used as a plugin to any tools or standalone API or web services and is well suited for Centralized Substation control systems.

While the present invention has been described in detail with reference to certain embodiments, it should be appreciated that the present invention is not limited to those embodiments. In view of the present invention, many modifications and variations would be present themselves to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of Reference Numerals

| | |
|---|---|
| Modbus device | 102 |
| IEC 61850 subsystem | 104 |
| Gateway | 106 |
| SCADA system | 202 |
| Field device | 204 |
| Environment | 300 |
| First device | 302 |
| System | 304 |
| Second device | 306 |
| List of signals in first protocol | 308 |
| Communication description file | 310 |
| Method | 400 |
| Steps | 401-405 |
| Bus | 502 |
| Processor | 504 |
| Memory | 506 |
| Communication interface | 508 |
| Database | 510 |
| User interface | 512 |
| First model | 514 |
| Second model | 516 |
| Steps | 601-610 |
| Modification input | 611 |
| Configurator tool | 700 |
| Steps | 701-705 |

## Claims

1. A computer-implemented method (400) of generating a communication description file for configuring devices in an automation system, the method (400) comprising:
receiving (401), by a processor (504), an input comprising a list of signals for communication between a plurality of devices of the automation system;
determining (402), by the processor (504), a first protocol associated with the list of signals, wherein the list of signals is to be converted to a second protocol;
**characterized by:**
determining (403), by the processor (504), a first model (514) for application of at least one conversion factor associated with the second protocol, using a second model (516);
determining (404), by the processor (504), a mapping of the list of signals to the second protocol based on an application of at least one conversion factor; and
generating (405), by the processor (504), the communication description file based on the mapping.

2. The computer-implemented method (400) according to claim 1, wherein the first model (514) determines the at least one conversion factor associated with the second protocol based on at least one of the first protocol associated with the list of signals, the second protocol corresponding to the communication between the plurality of devices, and a file type of the communication description file.

3. The computer-implemented method (400) according to claim 1, further comprising:
enabling, by the processor (504), configuration of a gateway between a first device (302) from the plurality of devices and a second device (306) from the plurality of devices, wherein the first device (302) supports the first protocol and the second device (306) supports the second protocol.

4. The computer-implemented method (400) according to any of claims 1-2, wherein determining, by the processor (504), the first protocol associated with the list of signals comprises:
extracting, by the processor (504), data associated with the list of signals, wherein the extracted data comprises address information of the list of signals corresponding to the first protocol;
detecting, by the processor (504), from the extracted data, a language of the list of signals;
converting, by the processor (504), the language of the extracted data in the list of signals into a preferred language for analysis; and
determining, by the processor (504), the first protocol associated with the list of signals by analyzing the data of the list of signals in the preferred language.

5. The computer-implemented method (400) according to any of claims 1, wherein the mapping of the list of signals to the second protocol comprises:
a plurality of signals and corresponding address information associated with the first protocol and corresponding mapped plurality of signals and corresponding address information associated with the second protocol.

6. The computer-implemented method (400) according to any of claims 1, wherein the second model (516) is trained using a predefined training dataset and
the predefined training dataset comprises historically generated communication description files, communication mapping configuration, historic configuration data, the plurality of signal lists, and a plurality of mappings of the plurality of signals.

7. The computer-implemented method (400) according to any of claims 1, further comprising:
displaying, by the processor (504), a recommendation of the mapping of the list of signals to the second protocol on a screen of the automation system;
receiving, by the processor (504), a modification input from the user for modifying the mapping of the list of signals;
modifying, by the processor (504), the mapping of the list of signals based on the modification input; and
generating, by the processor (504), the communication description file based on the modified mapping.

8. The computer-implemented method (400) according to claim 1 and claim 7, further comprising:
generating, by the processor (504), a feedback signal based on the modification input; and
updating, by the processor (504), the second model (516) based on the feedback signal.

9. The computer-implemented method (400) according to claim 1, wherein the first model (514) is a classification machine learning (ML) model.

10. The computer-implemented method (400) according to claim 1, wherein the second model (516) is a generative artificial intelligence model.

11. A system (304) for generating a communication description file for configuring devices in an automation system, the system comprising:
a processor (504); and
a memory (506) coupled to the processor (504), wherein the memory (506) comprises instructions which, when executed by the processor (504),
configures the processor (504) to:
receive an input comprising a list of signals for communication between a plurality of devices of the automation system;
determine a first protocol associated with the list of signals, wherein the list of signals is to be converted to a second protocol;
**characterized by**:
determine a first model (514) for application of at least one conversion factor associated with the second protocol, using a second model;
determine a mapping of the list of signals to the second protocol based on an application of at least one conversion factor; and
generate the communication description file based on the mapping.

12. A computer program product, comprising computer program code which, when executed by a processor (504), cause the processor (504) to carry out the method of one of the claims 1 to 10.

13. A computer-readable medium comprising a computer program product comprising computer program code which, when executed by a processor (504), cause the processor (504) to carry out the method of one of the claims 1 to 10.
